# EUROPÄISCHE PATENTSCHRIFT

(11) **EP 2 583 091 B1**
(45) Veröffentlichungstag und Bekanntmachung des Hinweises auf die Patenterteilung: **16.09.2020**
(21) Anmeldenummer: 11725078.7
(22) Anmeldetag: 10.06.2011
(51) Int. Cl.: G01N 27/406, G01N 27/419

(54) **VERFAHREN ZUM BETREIBEN EINER GASSONDE**
METHOD FOR OPERATING A GAS PROBE
PROCEDE POUR FAIRE FONCTIONNER UNE SONDE DE GAZ

(30) Priorität: 15.06.2010 DE 102010030117
(43) Veröffentlichungstag der Anmeldung: 24.04.2013
(73) Patentinhaber: Robert Bosch GmbH, 70442 Stuttgart (DE)
(72) Erfinder: BEVOT, Claudius, 70197 Stuttgart (DE); SCHICHLEIN, Helge, 70197 Stuttgart (DE)
(86) Internationale Anmeldenummer: PCT/EP2011/059739
(87) Internationale Veröffentlichungsnummer: WO 2012/007238

(56) Entgegenhaltungen:
- EP-A2- 0 127 964
- EP-A2- 0 147 233
- DE-A1- 3 606 045
- DE-A1-102005 056 515
- US-A- 4 601 809
- US-A1- 2005 000 832

## Beschreibung

### Stand der Technik

Die Erfindung geht aus von einem Verfahren zum Betreiben einer Gassonde nach der Gattung des unabhängigen Anspruchs 1.

Eine sogenannte Breitband-Lambdasonde und eine Schaltungsanordnung zum Betreiben einer solchen Breitband-Lambdasonde geht beispielsweise aus der Buchveröffentlichung "Bosch Kraftfahrtechnisches Taschenbuch", 25. Auflage, Oktober 2003, Seite 134 hervor. Eine solche Sonde in Mehrschichtkeramik besteht im Wesentlichen aus einer Kombination von herkömmlicher, als galvanische Zelle wirkende Konzentrationssonde (Nernst-Sonde) sowie einer Grenzstrom- oder "Pump"-Zelle. An die Pumpzelle wird von außen eine Spannung angelegt. Wenn die Spannung groß genug ist, stellt sich ein sogenannter Grenzstrom ein, der proportional dem Unterschied der Sauerstoffkonzentration auf beiden Seiten der Sonde ist. Mit dem Strom werden - polaritätsabhängig - Sauerstoffionen transportiert. Durch die Schaltungsanordnung, die eine elektronische Regelschaltung darstellt, wird sichergestellt, dass der Konzentrationssonde von der Pumpzelle über einen sehr engen Diffusionsspalt immer genau so viel Sauerstoff aus dem Abgas zugeführt wird, dass an ihr der Zustand Lambda = 1 herrscht. Bei Luftüberschuss im Abgas, im sogenannten Magerbereich, wird Sauerstoff abgepumpt, bei geringem Restsauerstoffgehalt des Abgases, im fetten Bereich, wird durch Umkehrung der Pumpspannung Sauerstoff zugeführt. Der Pumpstrom bildet dabei das Ausgangssignal der Sonde.

Bei derartigen zweizelligen Breitband-Lambdasonden wird eine feste Soll(Nernst)spannung vorgegeben, die zumeist 450 mV beträgt. Diese feste Spannung dient als Sollwert für einen Pumpstromregler. Der Pumpstromregler hat die Aufgabe, durch die Variation der Höhe und Polarität des Pumpstroms die Nernstzellenspannung auf den gewünschten, festen Sollwert zu regeln.

Diese Regelung der Nernstspannung auf einen festen Wert setzt einen vorgegebenen Betriebspunkt der Sonde voraus, einen Betriebspunkt, in dem die Sonde ordnungsgemäß arbeitet und der z.B. durch eine Sollbetriebstemperatur charakterisiert ist. Ist diese Sollbetriebstemperatur beispielsweise nicht erreicht, ist ein ordnungsgemäßer Betrieb der Sonde nicht gewährleistet. So kann beispielsweise aufgrund der Regelung auf einen festen Wert der Nernstspannung ein Schwingen des Pumpstromreglers bei Unterschreiten der Betriebstemperatur auftreten. Eine Sonde und ein Verfahren zum Betreiben der Sonde ist auch aus der US 4601809 bekannt.

### Offenbarung der Erfindung

### Vorteile der Erfindung

Das erfindungsgemäße Verfahren mit den Merkmalen des unabhängigen Anspruchs 1 hat demgegenüber den Vorteil, dass die Sonde über einen weiten Betriebsbereich betreibbar ist, insbesondere auch beispielsweise dann, wenn die Sollbetriebstemperatur noch nicht erreicht ist, die Sonde also eine Temperatur aufweist, die niedriger ist als die Sollbetriebstemperatur.

Auch in diesem Falle ist ein stabiler Betrieb dadurch gewährleistet, dass der vorgebbare Wert der Nernstspannung nicht fest vorgegeben wird, sondern variierbar ist. Damit ist gewissermaßen eine Anpassung der Betriebsweise der Sonde an vorgegebene Randbedingungen möglich.

Durch die in den abhängigen Ansprüchen aufgeführten Maßnahmen sind vorteilhafte Weiterbildungen und Verbesserungen des im unabhängigen Anspruch angegebenen Verfahrens möglich. So sieht eine vorteilhafte Ausführungsform vor, dass die Variation des vorgebbaren Werts der Nernstspannung betriebspunktabhängig erfolgt. Damit wird die Nernstspannung betriebspunktabhängig angepasst.

Zweckmäßigerweise erfolgt die Variation des vorgebbaren Werts der Nernstspannung in Abhängigkeit von der Zusammensetzung des Gasgemisches.

Die Variation kann dabei zweckmäßigerweise kontinuierlich erfolgen, das heißt, es erfolgt eine kontinuierliche Variation des vorgebbaren Werts der Nernstspannung. Damit ist die Sonde an unterschiedlichste Betriebspunkte einstellbar.

Eine andere Ausführungsform sieht vor, dass eine Variation des vorgebbaren Werts der Nernstspannung stufenförmig auf wenigstens zwei Spannungswerte erfolgt.

Für den Fall, dass die Sollbetriebstemperatur der Sonde nicht erreicht ist, sieht eine Ausgestaltung vor, dass bei Unterschreiten der Sollbetriebstemperatur der Sonde eine Absenkung des vorgebbaren Werts der Nernstspannung, insbesondere von 450 mV auf 200 mV, erfolgt.

### Kurze Beschreibung der Zeichnungen

Ausführungsbeispiele der Erfindung sind in den Zeichnungen dargestellt und in der nachfolgenden Beschreibung näher erläutert. Dabei können die Merkmale jeweils für sich und in Kombination verwirklicht sein.

Es zeigen:
- Fig. 1: schematisch ein Sensorelement eines Gassensors mit einer Schaltungsanordnung und
- Fig. 2: das Ersatzschaltbild des Gassensors mit einer erfindungsgemäßen Schaltungsanordnung.

### Ausführungsformen der Erfindung

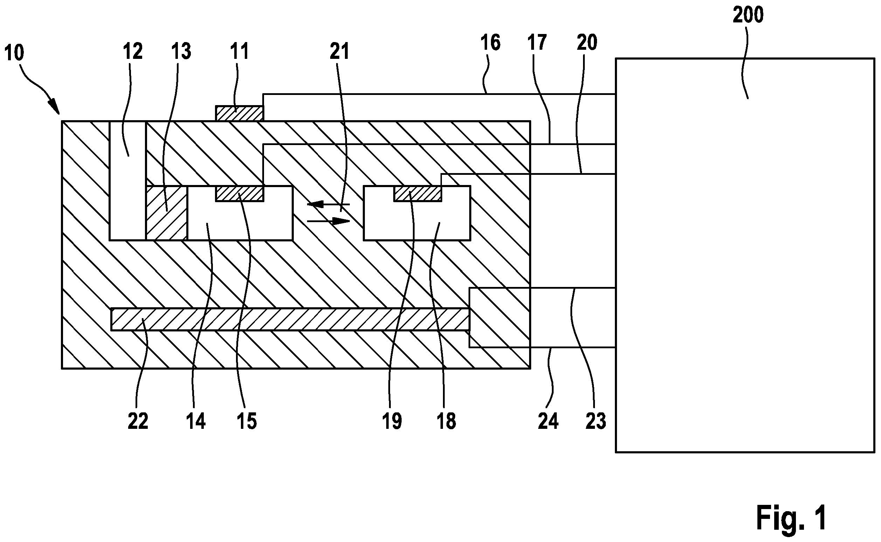

Der in Fig. 1 schematisch gezeigte Gassensor 10 enthält eine erste Elektrode, auch Außenpumpelektrode 11 genannt, die einem zu untersuchenden Gas ausgesetzt ist. Das zu untersuchende Gas gelangt über einen Gaskanal 12 und eine Diffusionsbarriere 13 in einen Messgasraum 14, in dem eine zweite Elektrode, auch innere Pumpelektrode 15 genannt, angeordnet ist. Zwischen der ersten und der zweiten Elektrode 11, 15 entsteht eine Pumpzelle. Die erste Elektrode 11 ist mit einer Pumpstromleitung 16 und die zweite Elektrode 15 mit einer Messleitung 17 verbunden.

Der Gassensor 10 enthält einen Referenzgasraum 18, in dem eine dritte Elektrode, auch Referenzelektrode 19 genannt, angeordnet ist, die mit einer Referenzpumpstromleitung 20 verbunden ist. Zwischen dem Referenzgasraum 18 und dem Messgasraum 14, genauso wie zwischen den Elektroden 11, 15 entsteht eine Nernstzelle mit einer Nernstspannung U_{N}, in der ein Referenzgasionentransport 21 stattfinden kann. Die Nernstspannung U_{N} ist zwischen den Leitungen 17 und 20 abgreifbar.

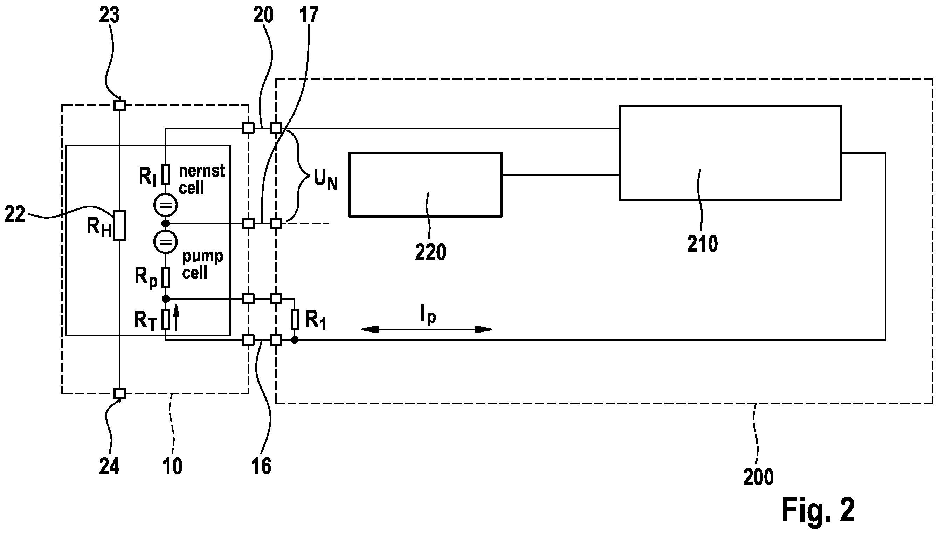

In Fig. 2 sind schematisch ein Ersatzschaltbild eines derartigen Gassensors sowie ein detaillierter Aufbau der Schaltungsanordnung 200, die beispielsweise Teil eines Steuergerätes einer Brennkraftmaschine ist, dargestellt. Dabei sind gleiche Elemente mit den gleichen Bezugszeichen wie in Fig. 1 bezeichnet. Die Sensorheizung 22 ist in Fig. 2 als Widerstand RH bezeichnet und an Anschluss- bzw. Stecker-Kontakte sind die Heizleitungen 23, 24 anschließbar. Die Nernstzelle ist schematisch als Ersatzschaltbild aus einem Widerstand Ri und einer Spannungsquelle dargestellt. Die Pumpzelle ist ebenfalls als Ersatzschaltbild aus einer Spannungsquelle und einem Widerstand Rₚ dargestellt. In dem Sensor kann noch ein Trimmwiderstand Rr angeordnet sein, der parallel zu einem in der Schaltungsanordnung 200 angeordneten Widerstand R1 liegt und dem Abgleich der Sonde auf an sich bekannte und hier nicht näher beschriebene Weise dient.

Die Schaltungsanordnung 200 weist einen Pumpstromregler 210 auf, der analog oder digital aufgebaut sein kann. Dieser Pumpstromregler 210 dient zur Einstellung des Pumpstroms Iₚ, mit dem die Sonde 10 beaufschlagt wird. Bei aus dem Stand der Technik bekannten Sonden erfolgt dabei die Einstellung des Pumpstroms in Abhängigkeit von einem vorgebbaren Wert der Nernstspannung, der zumeist 450 mV beträgt. Diese feste Spannung dient als Sollwert für den Pumpstromregler 210. Der Pumpstromregler hat die Aufgabe, durch die Variation des Pumpstroms Iₚ in Bezug auf dessen Höhe und Polarität über der Pumpzelle die Nernstzellenspannung auf den gewünschten, festen Sollwert zu regeln. Nun kann der Fall auftreten, dass die Sonde 10 beispielsweise ihre Sollbetriebstemperatur noch nicht erreicht hat. In diesem Falle ist ein stabiler Betrieb der Sonde 10 nicht gewährleistet, vielmehr führt eine derartige Regelung zu einem Schwingen des Pumpstromreglers 210.

Grundidee der Erfindung ist es daher, die Nernstspannung U_{N} nicht mehr auf einen festen vorgebbaren Wert mit Hilfe des Pumpstromreglers einzustellen, sondern einen variablen Wert der Nernst-Sollspannung vorzugeben. Dies ist durch die Schaltungseinheit 220 schematisch dargestellt. Die Variation der Spannung kann z.B. in Abhängigkeit von Parametern, beispielsweise abhängig von der Sondentemperatur oder von der Zusammensetzung des Gasgemisches erfolgen. Die Variation der Spannung kann sowohl kontinuierlich als auch stufenförmig über zwei oder mehrere feste Werte in Abhängigkeit von diesen Parametern erfolgen.

Durch eine solche Variation der Sollspannung, das heißt des vorgebbaren Werts der Nernstspannung kann in Betriebspunkten mit besonderen RandBedingungen ein stabiler Betrieb der Sonde 10 gewährleistet werden. Zum Beispiel kann bei einer kalten Sonde, deren Temperatur niedriger als die Sollbetriebstemperatur ist, ein stabiler Betrieb der Sonde 10 gewährleistet werden, wenn die Sollspannung, das heißt der vorgebbare Wert der Nernstspannung z.B. von 450 mV auf 200 mV abgesenkt wird. In diesem Falle findet die Absenkung des vorgebbaren Werts der Nernstspannung in der Schaltungseinheit 220 statt und der Pumpstromregler 210 regelt einen entsprechenden Pumpstrom Iₚ ein. Es ist zu bemerken, dass der Pumpstromregler neben einem diskreten analogen oder digitalen Aufbau auch als Computerprogramm in einem Steuergerät der Brennkraftmaschine implementiert sein kann.

## Patentansprüche

1. Verfahren zum Betreiben einer Sonde (10) zur Bestimmung der Sauerstoffkonzentration in einem Gasgemisch, insbesondere einer Lambdasonde zur Bestimmung der Sauerstoffkonzentration im Abgas von Brennkraftmaschinen, mit zwei als äußere und innere Pumpelektrode (11, 15) wirkenden und eine Pumpzelle bildenden Elektroden, mit zwei als Nernstelektrode (15) und Referenzelektrode (19) wirkenden, eine Nernstzelle bildenden Elektroden, wobei ein Pumpstromregler (210) die Pumpzelle mit einem Pumpstrom so beaufschlagt, dass eine vorgebbare, an der Nernstzelle abgreifbare Nernstspannung (U_{N}) auf einen vorgebbaren Wert geregelt wird, wobei der vorgebbare Wert der Nernstspannung variiert wird, **dadurch gekennzeichnet, dass** die Variation des vorgebbaren Werts der Nernstspannung in Abhängigkeit von der Sondentemperatur erfolgt.

2. Verfahren nach Anspruch 1, **dadurch gekennzeichnet, dass** die Variation des vorgebbaren Werts der Nernstspannung in Abhängigkeit von der Zusammensetzung des Gasgemisches erfolgt.

3. Verfahren nach einem der Ansprüche 1 bis 2, **dadurch gekennzeichnet, dass** eine kontinuierliche Variation des vorgebbaren Werts der Nernstspannung erfolgt.

4. Verfahren nach einem der Ansprüche 1 bis 2, **dadurch gekennzeichnet, dass** die Vorgabe des Werts der Nernstspannung stufenförmig auf wenigstens zwei Spannungswerte erfolgt.

5. Verfahren nach Anspruch 1, **dadurch gekennzeichnet, dass** bei Unterschreiten einer Sollbetriebstemperatur der Sonde eine Absenkung des vorgebbaren Werts der Nernstspannung, insbesondere von 450 mV auf 200 mV, erfolgt.

## Claims

1. Method for operating a probe (10) for determining the oxygen concentration in a gas mixture, in particular a lambda probe for determining the oxygen concentration in the exhaust gas of internal combustion engines, having two electrodes which act as an outer and an inner pump electrode (11, 15) can form a pump cell, having two electrodes which act as a Nernst electrode (15) and a reference electrode (19) and form a Nernst cell, wherein a pump current regulator (210) applies a pump current to the pump cell in such a way that a predefinable Nernst voltage (U_{N}), which can be tapped at the Nernst cell, is adjusted to a predefinable value, wherein the predefinable value of the Nernst voltage is varied, **characterized in that** the predefinable value of the Nernst voltage is varied in accordance with the probe temperature.

2. Method according to Claim 1, **characterized in that** the predefinable value of the Nernst voltage is varied in accordance with the composition of the gas mixture.

3. Method according to one of Claims 1 to 2, **characterized in that** the predefinable value of the Nernst voltage is varied continuously.

4. Method according to one of Claims 1 to 2, **characterized in that** the value of the Nernst voltage is predefined in a stepped fashion to at least two predefinable values.

5. Method according to Claim 1, **characterized in that** when a setpoint operating temperature of the probe is undershot, the predefinable value of the Nernst value drops, in particular from 450 mV to 200 mV.

## Revendications

1. Procédé pour faire fonctionner une sonde (10) destinée à la détermination de la concentration en oxygène dans un mélange gazeux, en particulier une sonde lambda destinée à la détermination de la concentration en oxygène dans les gaz d'échappement de moteurs à combustion interne, comprenant deux électrodes agissant comme des électrodes de pompage extérieure et intérieure (11, 15) et formant une cellule de pompage, comprenant deux électrodes agissant comme une électrode de Nernst (15) et une électrode de référence (19) et formant une cellule de Nernst, dans lequel un régulateur de courant de pompage (210) alimente la cellule de pompage par un courant de pompage de telle sorte qu'une tension de Nernst (U_{N}) prédéfinissable et pouvant être prélevée à la cellule de Nernst est réglée sur une valeur prédéfinissable, la valeur prédéfinissable de la tension de Nernst étant amenée à varier, **caractérisé en ce que** la variation de la valeur prédéfinissable de la tension de Nernst est effectuée en fonction de la température de sonde.

2. Procédé selon la revendication 1, **caractérisé en ce que** la variation de la valeur prédéfinissable de la tension de Nernst est effectuée en fonction de la composition du mélange gazeux.

3. Procédé selon l'une quelconque des revendications 1 à 2, **caractérisé en ce qu'**une variation continue de la valeur prédéfinissable de la tension de Nernst est effectuée.

4. Procédé selon l'une quelconque des revendications 1 à 2, **caractérisé en ce que** la spécification de la valeur de la tension de Nernst est effectuée de manière échelonnée sur au moins deux valeurs de tension.

5. Procédé selon la revendication 1, **caractérisé en ce qu'**en cas de soupassement d'une température de fonctionnement nominale de la sonde, une baisse de la valeur prédéfinissable de la tension de Nernst est effectuée, en particulier de 450 mV à 200 mV.
